**Europäisches Patentamt**

**European Patent Office**

**Office européen des brevets**

(19)

(11) Numéro de publication: **0 002 993**
**B1**

(12) **FASCICULE DE BREVET EUROPEEN**

(45) Date de publication du fascicule de brevet: **04.11.81**

(51) Int. Cl.³: **G 02 C 5/00**

(21) Numéro de dépôt: **78400260.2**

(22) Date de dépôt: **22.12.78**

(54) **Monture de lunettes.**

(30) Priorité: **03.01.78 FR 7800032**

(43) Date de publication de la demande:
**11.07.79 Bulletin 79/14**

(45) Mention de la délivrance du brevet:
**04.11.81 Bulletin 81/44**

(84) Etats Contractants Désignés:
**BE CH DE GB IT NL SE**

(56) Documents cités:
**DE - A - 2 505 132**

(73) Titulaire: **De Monts, Thibaut**
**7, rue Maître ALBERT**
**F-75005 Paris (FR)**

(73) Titulaire: **de Varax, Hervé**
**MARLIEU**
**F-38110 La Tour Du Pin (FR)**

(73) Titulaire: **Gourvenec, Jacques**
**5, rue de Charonne**
**F-75011 Paris (FR)**

(72) Inventeur: **De Monts, Thibaut**
**7, rue Maître ALBERT**
**F-75005 Paris (FR)**
Inventeur: **de Varax, Hervé**
**MARLIEU**
**F-38110 La Tour Du Pin (FR)**
Inventeur: **Gourvenec, Jacques**
**5, rue de Charonne**
**F-75011 Paris (FR)**

(74) Mandataire: **Boissel, Jean-François et al,**
**Cabinet BEAU DE LOMENIE 55, rue d'Amsterdam**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Monture de lunettes

La présente invention a pour objet une monture de lunettes.

Les montures de lunettes sont appelées à réunir plusieurs qualités difficiles à concilier telles que: légèreté et robustesse, rigidité du cadre et souplesse des branches. Elles doivent, en outre, s'adapter à la personnalité de l'utilisateur et présenter un caractère esthétique de plus en plus raffiné qui suit l'évolution de la mode.

Ces impératifs techniques et esthétiques limitent actuellement l'industrie oculaire à un nombre restreint de matières premières qui sont, principalement, les matières synthétiques, le métal et l'écaille.

Le bois, par la variété des essences utilisables, permettrait dans ce domaine d'obtenir des caractéristiques esthétiques vraiment nouvelles et agréables.

On pourrait certes envisager de réaliser les montures de lunettes par découpage de bois plein. Malheureusement la complexité de la forme générale des montures amène une grande fragilité de certaines parties qui obligatoirement se trouveront prises en travers du fil du bois, ce qui rejette en pratique l'utilisation de ce matériau.

L'invention a pour but d'éviter cet inconvénient en proposant des montures de lunettes en bois alliant la solidité à une esthétique particulièrement séduisante.

Ce but est atteint, conformément à l'invention, du fait que le cadre comprenant les deux cercles oculaires est constitué par des lamelles de bois disposées en couches mises en forme et assemblées par collage.

L'utilisation du bois lamellé collé permet d'allier l'esthétique du bois aux caractéristiques techniques exigées pour les montures de lunettes.

Il peut être envisagé de former la monture à partir de plusieurs lamelles de bois assemblées par collage et disposées selon des surfaces confondues avec la face du cadre, à la condition qu'au moins deux des lamelles soient disposées le fil de leur bois dans deux directions différentes, voire perpendiculaires.

Toutefois, selon un mode préféré de réalisation de l'invention, le cadre est formé de fines lamelles de bois assemblées par collage selon des surfaces à peu près perpendiculaires au plan général des verres et de l'ensemble du cadre. On allie ainsi la rigidité du cadre fermé à la possibilité de montage et de démontage des verres dans les cercles oculaires par déformation élastique de ceux-ci lorsque le cadre est ouvert.

De même, chaque branche sera constituée de lamelles d'épaisseurs uniformes assemblées sensiblement suivant une surface à peu près parallèle au plan général des verres et de l'ensemble du cadre, lorsque les branches sont en position repliée. Les branches peuvent ainsi être déformées pour être adaptées à la tête de l'utilisateur. De préférence, la structure des lamelles sera telle que, pour au moins une d'entre elles, par exemple la lamelle qui est disposée en surface sur le cadre et qui est visible, le fil du bois soit disposé dans une direction correspondant à la plus grande dimension de la lamelle.

On peut donner aux diverses lamelles des dimensions différentes et choisir leur mode d'assemblage de façon à obtenir des variations de section sur une partie choisie du cadre ou des branches, ce qui permet d'améliorer les qualités mécaniques de ladite partie, les extrémités de chaque lamelle pouvant être biseautées dans la largeur et l'épaisseur.

Suivant un mode particulier de réalisation du cadre, on peut interposer, entre les lamelles constituant le cadre, des pièces massives, en bois ou tout autre matériau, pour constituer le pontet, les supports destinés à recevoir les charnières ou tous autres organes mécaniques ou ornementaux.

Suivant un autre mode particulier de réalisation, on peut former la monture en assemblant des sous-ensembles, comme par exemple les branches, le cadre ou encore la pièce constituée par un pontet et deux cercles oculaires, de manière qu'au moins un des sous-ensembles qui constituent la monture forme une pièce de contour continu, ce'est-à-dire que la structure lamellée court sans discontinuité sur le contour dudit sous-ensemble en enveloppant, par exemple, au moins deux éléments tels que le pontet, les cercles oculaires, la barre frontale, les oreilles de support d'articulation de branche, etc. Ce mode d'assemblage peut offrir une grande variété de lignes ouvertes, fermées ou ramifiées et permet aussi des effets esthétiques nouveaux.

Suivant une particularité de la monture conforme à l'invention, un insert métallique peut être positionné entre les lamelles de bois permettant de renforcer les points fragiles et capable de servir d'élément d'assemblage entre les différentes parties de la monture.

La pose des inserts métalliques peut s'effectuer lors de l'assemblage des lamelles. Le logement de l'insert peut être obtenu soit par des encoches pratiquées à cet effet dans l'une ou plusieurs des lamelles, soit par écrasement de la structure lamellée lors due pressage de celle-ci. Dans tous les cas, l'insert se trouve emprisonné entre les lamelles externes.

Le long des branches, une lame métallique ainsi introduite en cours de fabrication, entre les plis du bois et dans le sens de la longueur, facilite l'adaptation de la branche, par déformation manuelle, à la forme de la tête de l'utilisateur. La raideur de la lame métallique permet ensuite de conserver la courbure désirée.

Suivant une autre particularité de la monture conforme à l'invention, la colle utilisée pour l'assemblage des lamelles constituant les branches sera du type dit "à film souple" permettant un léger déplacement longitudinal relatif des couches les unes par rapport aux autres sans qu'il y ait rupture ni décollement des plis lors due formage des branches. Au contraire, la colle employée pour l'assemblage des lamelles du cadre pourra être d'un type rigide afin de conférer au cadre suffisamment de raideur et de solidité lorsqu'il est fermé pour assurer un maintien correct des verres sans éliminer l'élasticité permettant l'ouverture du cadre pour la pose des verres.

On utilisera, bien entendu pour l'élaboration du cadre, des branches ou des sous-ensembles qui les composent, des adhésifs résistant aux conditions atmosphériques telles que température et humidité, chimiquement neutres, non irritants et compatibles avec les essences de bois employées.

A titre d'exemple, on peut citer les colles thixotropiques du type néoprène ou vinyliques pour la fabrication des branches, du type époxyde pour la fabrication des éléments rigides du cadre.

Les essences de bois constituant les lamelles entrant dans la fabrication des montures sont choisies selon leur aptitude à se cintrer facilement, la qualité de leur fibre, leur faible nodosité, l'absence d'huiles ou d'acidité incompatibles avec les adhésifs utilisables et, bien entendu, pour les lamelles externes en particulier, en fonction de leur aspect.

Afin de protéger le bois des intempéries et des souillures par les sécrétions cutanées, les différents éléments constituant la monture peuvent être protégés après les différentes opérations d'usinage et de polissage, par un vernis, par exemple incolore et mat afin de conserver l'aspect naturel du bois.

Des exemples détaillés seront décrits ci-dessous, à titre indicatif mais non limitatif, en référence aux figures des dessins joints qui représentent:

Fig. 1*a*, 1*b*, 1*c*: trois phases du formage d'un cadre de monture de lunettes conforme à l'invention,

Fig. 2: une vue perspective du cadre ainsi formé,

Fig. 3*a*, 3*b*: respectivement une vue éclatée et une vue en coupe d'un détail de l'empilage et de l'assemblage d'un ensemble de lamelles dans une zone du cadre illustré par la figure 2,

Fig. 4*a*, 4*b*: respectivement une vue en perspective et une vue en coupe d'un détail de la zone du cadre portant les supports d'articulation des branches,

Fig. 5: une vue de détail illustrant une variante de réalisation d'un pontet de monture conforme à l'invention,

Fig. 6: une vue en perspective d'une autre variante de réalisation d'un cadre de monture conforme à l'invention présentant des formes fermées, un pontet ramifié et des pièces de bois massif incorporées,

Fig. 7: une vue en coupe du cadre illustré par la figure 6 donnant, sous forme schématique, le détail du mode d'assemblage des lamelles,

Fig. 8: une vue en perspective d'une autre variante de réalisation d'un exemple de monture conforme à l'invention, constituée de plusieurs sous-ensembles,

Fig. 9: une vue de détail d'un empilage des lamelles et d'un insert métallique constituant une branche de monture conforme à l'invention,

Fig. 10: une vue en perspective d'une variante de réalisation de branche comprenant deux sous-ensembles en lamellé collé, un insert métallique et des éléments en bois massif,

Fig. 11 et 12: deux vues en perspective respectivement de l'insert métallique et d'un élément en bois massif contenus dans la branche de la figure 10,

Fig. 13: une vue en perspective d'encore un autre mode de réalisation d'une monture assemblée conforme à l'invention, et,

Fig. 14 à 17: des vues de détail de variantes de réalisation d'éléments de monture conformes à l'invention.

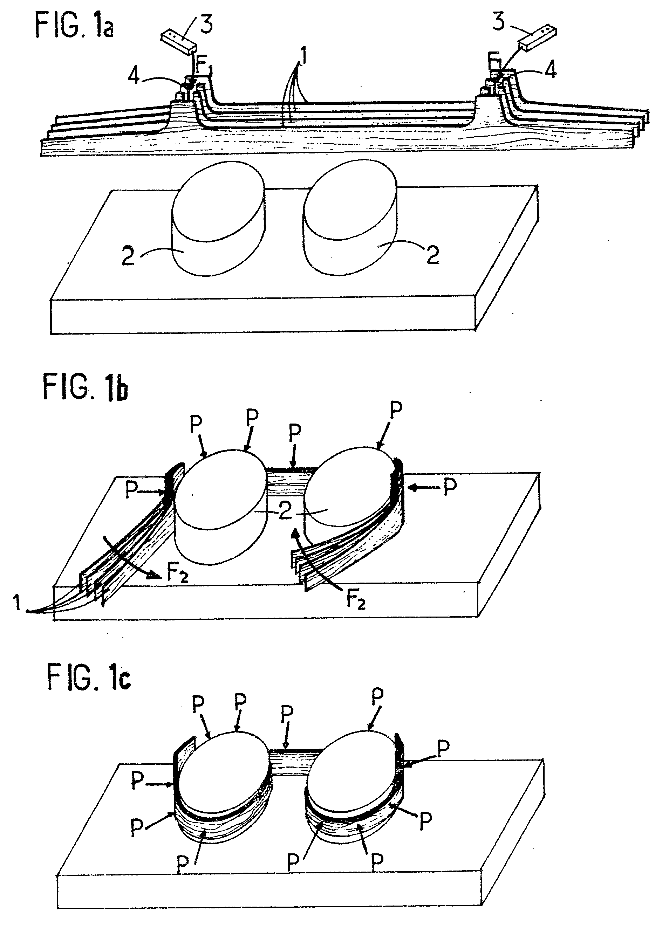

Les figures 1*a* à 1*c* illustrent le formage d'un cadre de monture de lunettes conforme à l'invention.

La figure 1*a* montre des lamelles de bois 1 prédécoupées et encollées dont on peut voir le fil du bois disposé selon leur longueur. Ces lamelles sont empilées devant une forme de moulage comprenant deux blocs 2 de profilé prédéterminé. Des inserts métalliques 3, sur lesquels seront fixées les charnières de montage des branches de la monture, sont introduits entre les lamelles externes dans des encoches 4 formées dans les lamelles internes de l'empilage. La mise en place des inserts 3 est réalisée comme le montrent les flèches F1.

La figure 1*b* montre le formage par enroulement des lamelles 1 sur le gabarit 2 suivant les flèches F2, une pression étant exercée suivant les flèches P.

La figure 1*c* montre, après formage complet, l'empilement des lamelles constituant le cadre, maintenu sous pression suivant les flèches P jusqu'à durcissement de l'adhésif.

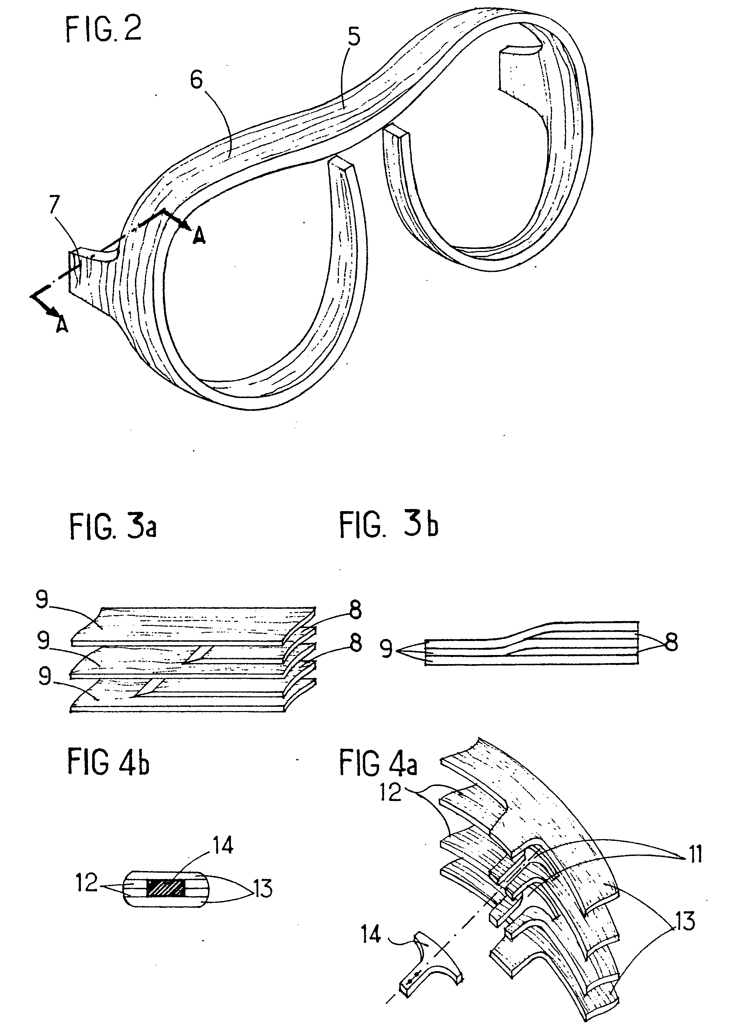

La figure 2 montre un exemple de cadre pouvant être réalisé suivant le mode de fabrication illustré précédemment. La partie frontale 5 est renforcée par l'augmentation de son épaisseur, grâce à l'emploi d'un nombrè de lamelles plus important que dans l'extrémité supérieure 6 des cercles oculaires. Une oreille 7 faisant partie intégrante de la structure lamellée du cadre constituera le support de chacune des charnières des branches.

La figure 3*a* montre en vue éclatée un détail des lamelles constituant la zone centrale 5 de la barre frontale du cadre de la figure 2. Les lamelles additionnelles 8 sont introduites entre celles (9) qui courent sur toute la périphérie du cadre pour augmenter localement l'épaisseur de celui-ci. Les lamelles 8 sont chanfreinées à leurs extrémitiés.

La figure 3*b* montre ces mêmes lamelles 8, 9 après collage.

Les figures 4*a* et 4*b* montrent des détails des éléments constituant l'oreille 7 du cadre de la figure 2. Sur la figure 4*a*, on peut voir, en éclaté, des encoches 11 pratiquées dans des lamelles 12 du cadre alors que des lamelles 13 ne présentent pas d'encoches. Un insert métallique 14 est introduit entre les plis 13 et positionné dans les encoches 11. La figure 4*b* montre une coupe suivant la ligne AA de la figure 2. Sur cette figure 4*b*, on peut voir les lamelles 12 et 13 du cadre et l'insert métallique 14.

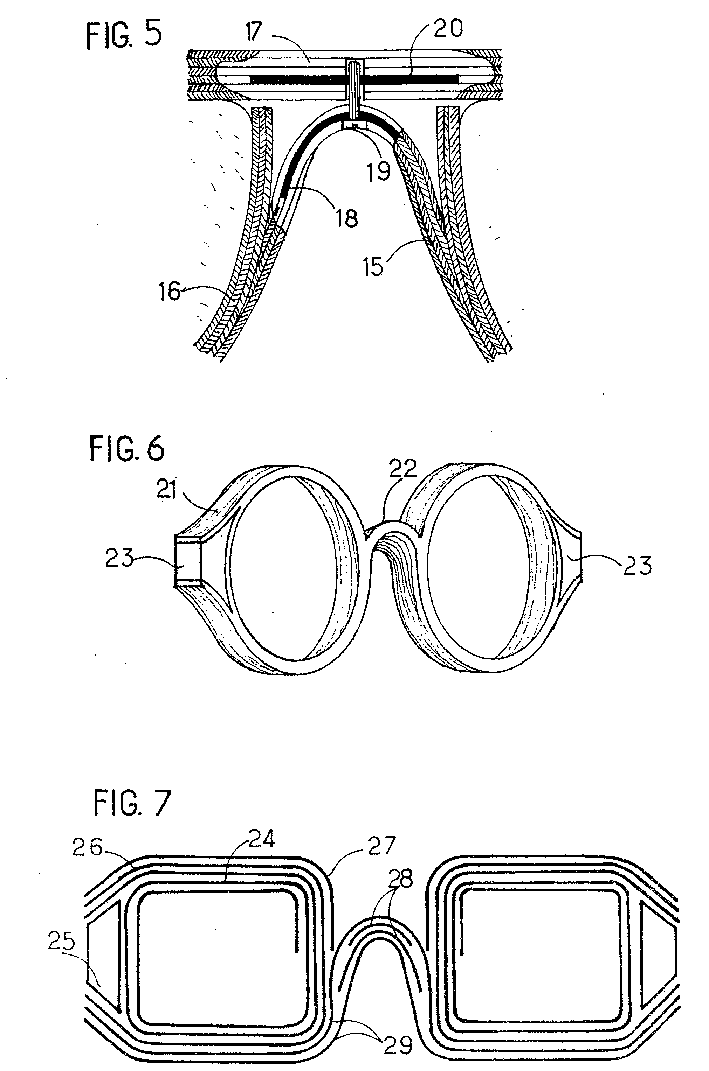

La figure 5 montre le détail de réalisation d'un pontet et de la fermeture des cercles oculaires suivant une variante possible de fabrication selon le procédé illustré par les figures 1*a* à 1*c*.

Le pontet 15 peut être réalisé séparément puis assemblé aux cercles oculaires 16 par introduction du pontet entre les lamelles constituant les parties oculaires qui sont ouvertes en leurs extrémités intérieures à proximité de la barre centrale 17 du cadre.

Le pontet 15 peut être renforcé mécaniquement par insertion, entre les lamelles le constituant, d'une tige métallique 18, introduite lors de la fabrication du pontet. Le serrage des verres se fait, après introduction de ceux-ci dans les drageoirs fraisés à cet effet à l'intérieur des cercles oculaires, par serrage du pontet 15 contre la barre frontale 17. Ce serrage est réalisé au moyen d'une vis simple 19 introduite dans un trou fraisé pratiqué dans la partie centrale du pontet. La vis 19 peut être vissée dans un insert métallique 20 prisonnier entre les lamelles de la partie centrale de la barre frontale du cadre.

La figure 6 montre un autre mode de réalisation d'un cadre de monture conforme à l'invention.

Le cadre est constitué par un sous-ensemble comprenant deux cercles oculaires 21 reliés ensemble par un pontet 22 et assemblés par ramification des lamelles du pontet et de celles constituant les cercles oculaires. Deux pièces de bois massives 23 servant de support de charnière des branches, sont insérées entre les lamelles extérieures d'extrémité des cercles oculaires 21.

La figure 7 montre schématiquement un exemple de disposition et de forme des lamelles pouvant constituer le cadre illustré par la figure 6. On peut voir une lamelle 24 qui, enroulée sur elle-même, forme un cercle oculaire. La pièce de bois massif 25, servant de support de charnière, est maintenue contre le cercle oculaire par les plis 26. La lamelle 27 sert de renfort de la partie supérieure de l'oculaire. Le pontet est formé par les lamelles 28 et est assemblé aux cercles oculaires par les lamelles 29; il peut être renforcé par insertion d'une tige métallique. Les lamelles 28 sont assemblées selon des surfaces tangentes à des plans inclinés par rapport au plan général du cadre, de manière que le pontet 22 ainsi constitué suive la ligne du nez.

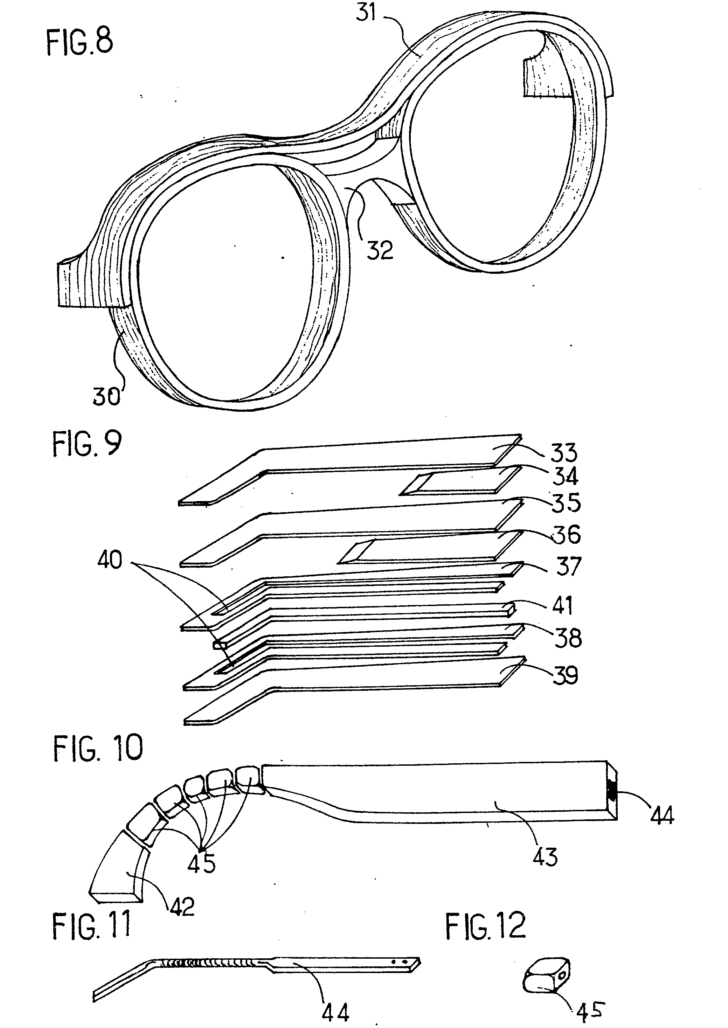

La figure 8 montre un autre mode de réalisation de cadre de monture conforme à l'invention. Ce cadre diffère des précédents en ce qu'il est constitué d'un assemblage par collage ou tout autre moyen de fixation de sous-ensembles réalisés séparément. Au moins un des sous-ensembles est un lamelles collées, au moins un autre pouvant être en pièce massive de bois.

On peut voir, sur la figure 8, les cercles oculaires 30 réalisés par assemblage de lamelles de bois. La partie frontale 31 comporte, à chaque extrémité, des oreilles qui supporteront les charnières des branches exécutées suivant le même méthode. Le pontet 32 peut être fait par usinage d'une pièce de bois massive ou d'un bloc de bois lamellé collé.

Dans le cas des montures illustrées par les figures 6 et 8, une ou plusieurs pièces massives en bois sont assemblées aux lamelles de bois. A titre de variante, ces pièces massives pourront être réalisées en métal ou en matière synthétique.

La figure 9 montre, suivant une vue éclatée, un exemple de fabrication des branches. Les lamelles 33 à 39, prédécoupées par emboutissage ou tout autre procédé de découpage, sont empilées suivant l'épaisseur de la branche. Les lamelles centrales 37 et 38 comportent une encoche 40 dans laquelle vient se loger un insert métallique 41 servant de renfort et permettant à la branche de conserver, après déformation, la courbure désirée.

Des lamelles 34 et 36, de longueurs différentes et chanfreinées à leur extrémité, sont introduites entre les lamelles 33, 35 et 37 pour donner à la branche une section variable.

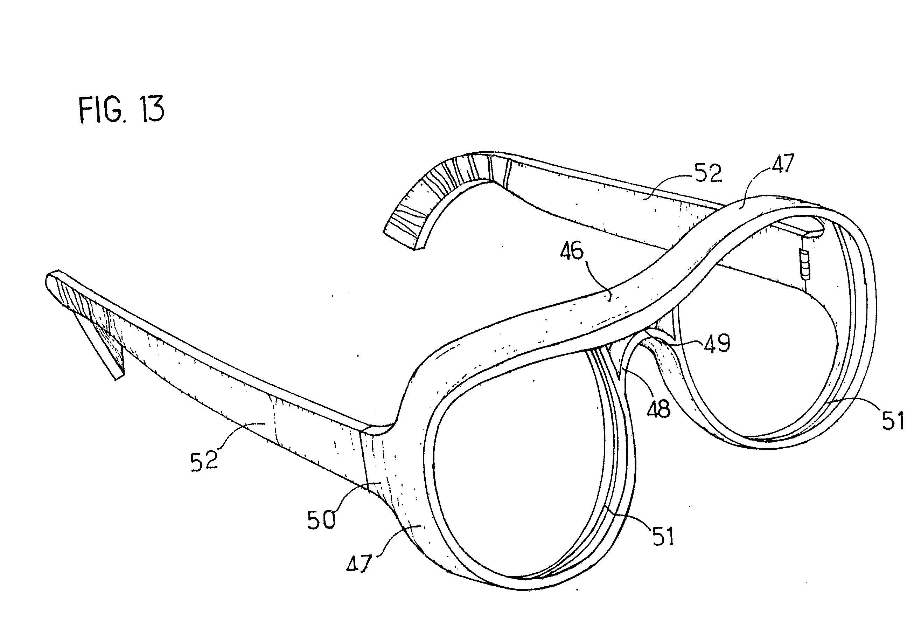

La figure 10 montre un autre mode de réalisation de branches comprenant deux sous-ensembles en lamellé collé 42 et 43, un insert métallique 44 et des éléments de bois 45. La figure 11 montre l'insert métallique de section rectangulaire se prolongeant en forme effilée dans sa partie auriculaire sur laquelle sont posés de petits éléments de bois 45 percés selon leur axe comme le montre la figure 12. Cet assemblage permet de déplacer à volonté la courbure auriculaire de la branche par simple déformation manuelle.

A titre de variante, chaque branche de la monture pourra comporter une armature métallique ou en matériau synthétique, s'étendant sur toute ou partie de l'épaisseur de la branche et recouverte sur ses faces de lamelles de bois auxquelles elle est assemblée par collage.

La figure 13 montre, en perspective, un autre mode de réalisation de monture de lunettes conforme à l'invention, où l'on reconnaît une barre frontale 46 formant un tout avec les cercles oculaires 47, le pontet 48 et les oreilles 50 de support d'articulation. Des drageoirs 51 destinés à recevoir les verres sont formés dans les cercles oculaires. Les branches 52 sont articulées sur des charnières fixées dans les oreilles 50.

Les verres sont immobilisés dans les drageoirs 51 par serrage d'une vis reliant en 49 le pontet 48 à la barre frontale 46, de mainière analogue à ce qui a été décrit plus haut en référence à la figure 5. Un tel mode de fixation des verres est bien connu en lui-même.

On notera que les cercles oculaires 47 non fermés présentent une relative élasticité qui participe au montage correct des verres.

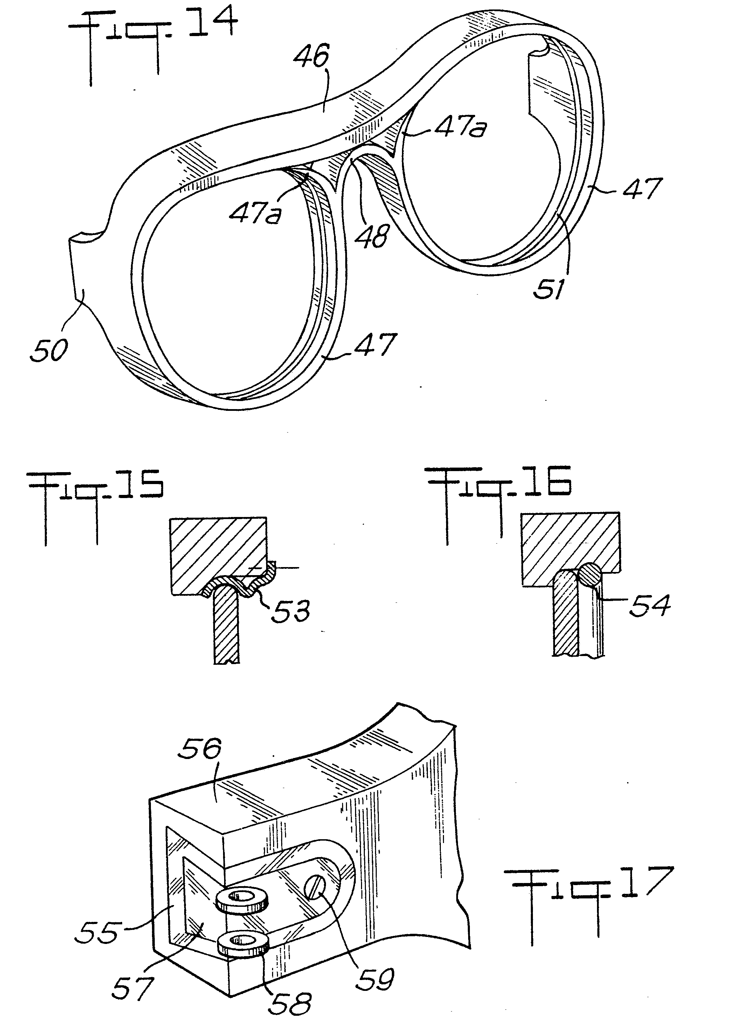

Les extrémités 47a des cercles oculaires 47 qui rejoignent la barre frontale dans sa partie centrale peuvent être biseautées et prolongées vers les côtés sous la barre frontale comme illustré par la figure 14. Le verre est alors complètement encerclé sans angles vifs. Les extrémités biseautées 47a peuvent se raccorder progressivement à la face inférieure de la barre frontale en prenant appui sur celle-ci (figure 14) ou, à titre de variante, se loger dans des évidements prévus dans cette face inférieure. Dans un cas comme dans l'autre, on conserve avantageusement un contour continu aux cercles oculaires.

La fixation des verres dans les cercles oculaires pourra être réalisée de différentes façons autres que celles décrites plus haut.

Ainsi, on pourra munir chaque cercle oculaire d'un drageoir métallique tel que celui 53 illustré en coupe transversale par la figure 15.

A titre de variante, un verre pourra être immobilisé dans un cercle oculaire, comme connu en soi, au moyen d'un jonc 54 logé dans une gorge 55 du cercle oculaire (figure 16). Ceci pourra notamment être utilisé dans le cas de cercles fermés comme ceux illustrés par les figures 6 et 8.

Toujours à titre de variante, les cercles oculaires pourront être ouverts sur leurs bords latéraux extérieurs et munis, à ce niveau, d'un système permettant leur serrage. Avantageusement alors, la barre frontale peut être prolongée latéralement pour masquer les systèmes de serrage.

Les moyens de raccordement et d'articulation des branches sur le cadre de la monture sont des charnières fixées sur des oreilles telles que 50 (figure 13) ou des pièces massives telles que 25 (figure 7).

Les charnières peuvent être collées ou rivetées sur une pièce solidaire du cadre. Lorsque cette pièce est en bois, le changement de la charnière s'avère alors impossible ou très difficile.

De préférence donc, la charnière 58 est portée par une pièce 57 assemblée, par exemple par une liaison de type à tenon et à mortaise telle qu'une queue d'aronde, à un socle rigide 55, par exemple métallique, solidaire d'une oreille 56 du cadre (figure 17). La liaison entre cette oreille du cadre et le socle est réalisée par collage ou également par assemblage du type à tenon et mortaise dans un logement formé du côté intérieur de l'oreille du cadre. La pièce 57 est immobilisée par une vis 59.

Les branches de la monture pourront le cas échéant être munies de systèmes à glissière ou à vis connus en soi permettant le réglage de leur longueur.

## Revendications

1. Monture de lunettes, caractérisée en ce que le cadre comprenant les deux cercles oculaires est constitué par des lamelles de bois disposées en couches, mises en forme et assemblées par collage.

2. Monture de lunettes selon la revendication 1, caractérisée en ce que les lamelles de bois qui constituent le cadre de la monture sont disposées suivant des surfaces sensiblement perpendiculaires à la face du cadre.

3. Monture de lunettes selon l'une des revendications 1 et 2, caractérisée en ce que les branches sont constituées au moins en partie par des lamelles de bois assemblées par collage et disposées suivant des surfaces sensiblement parallèles à la face du cadre lorsque les branches sont en position fermée.

4. Monture de lunettes selon l'une des revendications 1 à 3, caractérisée en ce que chaque cercle oculaire présente une discontinuité permettant le montage des verres par ouverture avec déformation élastique des cercles oculaires.

5. Monture de lunettes selon l'une des revendications 1 à 4, caractérisée en ce que le cadre comporte des lamelles de bois qui courent sans interruption le long de son pourtour.

6. Monture de lunettes selon l'une des revendications 1 à 5, caractérisée en ce que l'une au moins des lamelles de bois, notamment une lamelle disposée en surface, a le fil de son bois disposé dans la direction correspondant à la plus grande dimension de ladite lamelle.

7. Monture de lunettes selon l'une des revendications 1 à 6, caractérisée en ce que le cadre est prolongé, de chaque côté, par une oreille qui fait partie intégrante de la structure lamellée de celui-ci et qui sert de support pour les éléments de raccordement et d'articulation des branches.

8. Monture de lunettes selon l'une des revendications 1 à 7, caractérisée en ce que les dimensions des lamelles et leurs positions respectives engendrent, sur une partie au moins de la monture, une forme de section variable selon des lignes continues.

9. Monture de lunettes selon l'une des revendications 1 à 8, caractérisée en ce qu'au moins un insert métallique est logé entre les lamelles de bois sur une partie au moins de leur surface.

10. Monture de lunettes selon la revendication 9, caractérisée en ce que l'insert métallique est placé dans des encoches pratiquées à cet effet dans une ou plusieurs des lamelles.

11. Monture de lunettes selon la revendication 3, caractérisée en ce qu'une lame métallique déformable est introduite dans la branche entre les lamelles de bois et dans le sens de la longueur de la branche, pour permettre de modifier manuellement la forme de la branche afin de l'adapter à celle de la tête de l'utilisateur.

12. Monture de lunettes selon la revendication 3, caractérisée en ce que chaque branche de la monture contient, sur la quasi-totalité de sa longueur, un insert métallique qui a une section effilée sur la partie courbe auriculaire, partie sur laquelle est posée au moins un petit élément de bois qui entoure l'insert et sépare ses deux parties extrêmes, lesquelles sont logées dans des structures lamellées.

13. Monture de lunettes selon l'une des revendications 1 à 12, caractérisée en ce qu'au moins une pièce massive est assemblée aux lamelles en bois.

14. Monture de lunettes selon l'une des revendications 1 à 13, caractérisée en ce que le pontet et la barre frontale contiennent chacun, logée dans leurs lamelles, une pièce métallique recevant une vis de serrage permettant la fixation des verres de façon connue en soi.

15. Monture de lunettes selon l'une des revendications 1 à 14, caractérisée en ce que le pontet est constitué par des lamelles de bois inclinées par rapport au plan du cadre de façon que leur face suive la ligne du nez de l'utilisateur.

16. Monture de lunettes selon la revendication 13, caractérisée en ce que la pièce est en bois massif.

## Patentansprüche

1. Brillengestell, dadurch gekennzeichnet, dass der die beiden Augenreife bildende Rahmen aus schichtweise angeordneten, in Form gebrachten und zusammengeklebten Holzlamellen besteht.

2. Brillengestell nach Anspruch 1, dadurch gekennzeichnet, dass die den Rahmen des Gestells bildenden Holzlamellen flächengemäss wesentlich quer zur Rahmenvorderseite angeordnet sind.

3. Brillengestell nach einem der Ansprüche 1 oder 2, dadurch gekennzeichnet, dass die Bügel zumindest teilweise aus zusammengeklebten und flächengemäss in geschlossener Stellung der Bügel wesentlich parallel zur Rahmenvorderseite angeordneten Holzlamellen bestehen.

4. Brillengestell nach einem der Ansprüche 1 bis 3, dadurch gekennzeichnet, dass jeder Augenreif eine Unterbrechung aufweist, die sich unter elastischer Verformung der Augenreife öffnet und das Einlegen der Gläser ermöglicht.

5. Brillengestell nach einem der Ansprüche 1 bis 4, dadurch gekennzeichnet, das der Rahmen Holzlamellen aufweist, die ohne Unterbrechung seinen Umkreis umlaufen.

6. Brillengestell nach einem der Ansprüche 1 bis 5, dadurch gekennzeichnet, das zumindest eine der Holzlamellen, insbesonders eine an der Oberfläche angeordnete Lamelle ihre Holzfaser in der Richtung liegen hat, die der grössten Ausdehnung der genannten Lamelle entspricht.

7. Brillengestell nach einem der Ansprüche 1 bis 6, dadurch gekennzeichnet, dass der Rahmen auf beiden Seiten durch eine Flügel verlängert ist, der mit der Lamellenstruktur des Rahmens formschlüssig verbunden ist und als Halterung für die Verbindungs- und Schwenkelemente der Bügel dient.

8. Brillengestell nach einem der Ansprüche 1 bis 7, dadurch gekennzeichnet, dass die Ausdehnungen der Lamellen und ihre jeweiligen Stellungen zumindest über einen Teil des Gestells eine nach fortlaufenden Linien veränderliche Querschnittsform erzeugen.

9. Brillengestell nach einem der Ansprüche 1 bis 8, dadurch gekennzeichnet, dass zumindest ein Metalleinsatz zwischen den Holzlamellen auf mindestens einem Teil ihrer Oberfläche eingesetzt ist.

10. Brillengestell nach Anspruch 9, dadurch gekennzeichnet, dass der Metalleinsatz in zu diesem Zweck in einer oder mehreren Lamellen vorgesehenen Einkerbungen eingesetzt ist.

11. Brillengestell nach Anspruch 3, dadurch gekennzeichnet, dass ein verformbares Metallplättchen zwischen den Holzlamellen und in Längsrichtung des Bügels in den Bügel eingefügt ist, so dass die Form des Bügels mit der Hand verändert werden kann, um sie der Kopfform des Brillenträgers anzupassen.

12. Brillengestell nach Anspruch 3, dadurch gekennzeichnet, dass jeder Bügel des Brillengestells über quasi seine Gesamtlänge einen Metalleinsatz aufweist, der an seinem geschwungenen Ohrenteil einen zugespitzten Querschnitt hat, wobei auf diesem Ohrenteil zumindest ein kleines Holzteil angebracht ist, das den Einsatz einfasst und seine beiden Endteile trennt, welche in Lamellenstrukturen liegen.

13. Brillengestell nach einem der Ansprüche 1 bis 12, dadurch gekennzeichnet, das zumindest ein massives Teil mit den Holzlamellen verdunden ist.

14. Brillengestell nach einem der Ansprüche 1 bis 13, dadurch gekennzeichnet, dass der Steg und der Stirnteil des Rahmens jeweils ein in ihren Lamellen eingesetztes Metallstück zur Aufnahme einer Klemmschraube aufweisen, die die Befestigung der Gläser in an sich bekannter Weise ermöglicht.

15. Brillengestell nach einem der Ansprüche 1 bis 14, dadurch gekennzeichnet, dass der Steg aus Holzlamellen besteht, die in bezug auf die Rahmenfläche derart geneigt sind, dass ihre Vorderseite gemäss der Nasenlinie des Brillenträgers verläuft.

16. Brillengestell nach Anspruch 13, dadurch gekennzeichnet, dass das massive Teil aus massivem Holz besteht.

## Claims

1. Spectacle frame, characterized in that the frame comprising the two lens loops is constituted by slats of wood arranged in layers, shaped and adhesively assembled.

2. Spectacle frame according to claim 1, characterized in that the slats of wood constituting the frame are disposed with their surfaces substantially perpendicular to the face of the frame.

3. Spectacle frame according to one of claims 1 and 2, characterized in that the side pieces are at least partially formed by wood slats adhesively assembled and arranged with their surfaces substantially parallel to the face of the frame when the side pieces are in folded position.

4. Spectacle frame according to one of claims 1 to 3, characterized in that each lens loop has a discontinuity whereby said loops may be elastically deformed to receive lenses therein.

5. Spectacle frame according to one of claims 1 to 4, characterized in that the frame comprises wood slats which run without interruption along its periphery.

6. Spectacle frame according to one of claims 1 to 5, characterized in that at least one of the wood slats, and particularly a slat located on the surface, has its grain extending in the direction corresponding to the largest dimension of said slat.

7. Spectacle frame according to one of claims 1 to 6, characterized in that the frame is extended, on each side, by a wing integral with the laminated structure thereof and which serves as support for the elements for the hinged connection of the side pieces.

8. Spectacle frame according to one of claims 1 to 7, characterized in that the dimensions of the slats and their respective positions produce, over at least a part of the frame, a shape of variable cross-section along continuous lines.

9. Spectacle frame according to one of claims 1 to 8, characterized in that at least one metal insert is housed between the wood slats over at least part of their surface.

10. Spectacle frame according to claim 9, characterized in that the metal insert is placed in notches made to this end in one or more of the slats.

11. Spectacle frame according to claim 3, characterized in that a deformable metal plate is introduced in the side piece between the wood slats and lengthwise with respect to the side piece, to enable the shape of the side piece to be altered by hand to adapt it to the shape of the wearer's head.

12. Spectacle frame according to claim 3, characterized in that each side piece of the frame contains, over virtually the whole of its length, a metal insert which has a tapering cross-section on the curved auricular portion, on which portion is placed at least one small wooden element which surrounds the insert and separates its two end parts, which are housed in laminated structures.

13. Spectacle frame according to one of claims 1 to 12, characterized in that at least one solid piece is assembled with the wood slats.

14. Spectacle frame according to one of claims 1 to 13, characterized in that the bridge and the front bar each contain, housed in their slats, a metal piece receiving a set screw for fixing the lenses in manner known per se.

15. Spectacle frame according to one of claims 1 to 14, characterized in that the bridge is constituted by slats of wood inclined with respect to the plane of the frame so that their face follows the line of the wearer's nose.

16. Spectacle frame according to claim 13, characterized in that the piece is made of solid wood.

**FIG. 1a**

**FIG. 1b**

**FIG. 1c**

FIG. 2

6

5

7

A

A

FIG. 3a

9
9
9
8
8

FIG. 3b

9
8

FIG 4b

14
12
13

FIG 4a

12
11
13
14

**FIG. 5**

17  20
19
18
15
16

**FIG. 6**

21  22
23  23

**FIG. 7**

26  24  27
28
25
29

3

0 002 993

FIG. 8

31

32

30

FIG. 9

33
34
35
36
37
41
38
39

40

FIG. 10

44

43

45

FIG. 11

42

45

44

FIG. 12

45

4

FIG. 13

0 002 993

0 002 993

FIG.14

FIG.15

FIG.16

FIG.17